# EUROPEAN PATENT SPECIFICATION

(11) **EP 3 672 087 B1**
(45) Date of publication and mention of the grant of the patent: **18.05.2022**
(21) Application number: 19217397.9
(22) Date of filing: 18.12.2019
(51) Int. Cl.: H04B 1/04, H04K 3/00, H04W 48/02

(54) **NETWORK CONTROL UNIT WITH POWER AMPLIFIER BLOCKS AND AIRCRAFT COMPRISING SUCH NETWORK CONTROL UNIT**
NETZWERKSTEUERUNGSEINHEIT MIT LEISTUNGSVERSTÄRKERBLÖCKEN UND FLUGZEUG MIT SOLCH EINER NETZWERKSTEUERUNGSEINHEIT
UNITÉ DE COMMANDE DE RÉSEAU AVEC DES BLOCS D'AMPLIFICATEUR DE PUISSANCE ET AÉRONEF COMPRENANT UNE TELLE UNITÉ DE CONTRÔLE DE RÉSEAU

(30) Priority: 21.12.2018 EP 18215643
(43) Date of publication of application: 24.06.2020
(73) Proprietor: BULL SAS, 78340 Les Clayes-sous-Bois (FR)
(72) Inventor: HALLA, Markus, 1210 Vienna (AT); KAUER, Christian, 1210 Vienna (AT); DANZER, Hermann, 1210 Vienna (AT); TUPPA, Walter, 1210 Vienna (AT)
(74) Representative: Argyma

(56) References cited:
- EP-A1- 2 475 104
- WO-A1-2016/120672
- CN-A- 103 684 654
- US-A1- 2010 176 867

## Description

The invention relates to a network control unit with power amplifier blocks and an aircraft comprising such a network control unit.

The invention applies more particularly to a network control unit comprising:
- a noise generation unit for generating low power noise signals in respective frequency bands;
- power amplifier blocks for respectively amplifying the low power noise signals into noise signals; and
- a multi-band combiner designed for summing the noise signals into a single output signal to be provided to an antenna.

A network control unit (NCU) is used in aircrafts to mask cellular ground base transceiver stations from passenger equipment like cell phones, transmitting personal electronic devices, etc. To achieve this, the NCU emits noise signals on different frequency bands used by the cellular ground base transceiver stations.

Because space is scarce in an airplane, the NCU must be compact. This can lead to put together the power amplifier blocks on one mounting frame with limited dimensions, which can lead to instabilities or unwanted oscillations. To prevent these unwanted oscillations, it is known to install absorber pads at predefined positions in the vicinity of the power amplifier blocks. However, these absorber pads use a significant amount of space.

An object of the invention is therefore a network control unit comprising:
- a noise generation unit for generating low power noise signals in respective frequency bands;
- power amplifier blocks for respectively amplifying the low power noise signals into noise signals; and
- a multi-band combiner designed for summing the noise signals into a single output signal to be provided to an antenna;
characterized in that the network control unit further comprises, for at least one of the power amplifier blocks, a circulator connected between this power amplifier block and the multi-band combiner.

Thanks to the invention, rather than trying to treat the oscillations once they appear, the use of the circulator prevents their appearance, so that less absorber pads, and sometimes even no absorber pads, are needed. More precisely, the use of the circulator allows redirecting a return signal so that it does not reach the power amplifier and does not cause the unwanted oscillations.

Optionally, the network control unit comprises, for each of the power amplifiers, a circulator connected between the power amplifier and the multi-band combiner.

Also optionally, the circulator comprises a first port connected to the power amplifier block, a second port connected to the multi-band combiner and a third port, and is designed such that the noise signal entering the first port is provided to the second port and such that a return signal entering the second port is provided to the third port, and the network control unit further comprises a matched load connected to the third port.

Also optionally, the network control unit comprises, for at least one power amplifier block, a band-pass filter connected between the noise generation unit and the power amplifier.

Also optionally, the band-pass filter is a ceramic band-pass filter.

Also optionally, the network control unit comprises a current monitoring system for monitoring currents respectively outputted by the power amplifier blocks.

Also optionally, each power amplifier block is designed for providing the respective noise signal at a power of at least 10 dBm.

Also optionally, each power amplifier block is designed for being controlled to provide the respective noise signal at a power between 10 dBm and 30 dBm.

Also optionally, the power amplifier blocks are designed for being controlled to be selectively activated and deactivated independently one from another.

Another object of the invention is an aircraft comprising a network control unit according to the invention.

The invention will be better understood with the aid of the description which follows, given solely by way of example and with reference to the appended drawings, in which:
[Fig.1] figure 1 diagrammatically shows the overall structure of a network control unit according to the invention, and
[Fig.2] figure 2 diagrammatically shows the overall structure of an isolator used in the network control unit of figure 1.

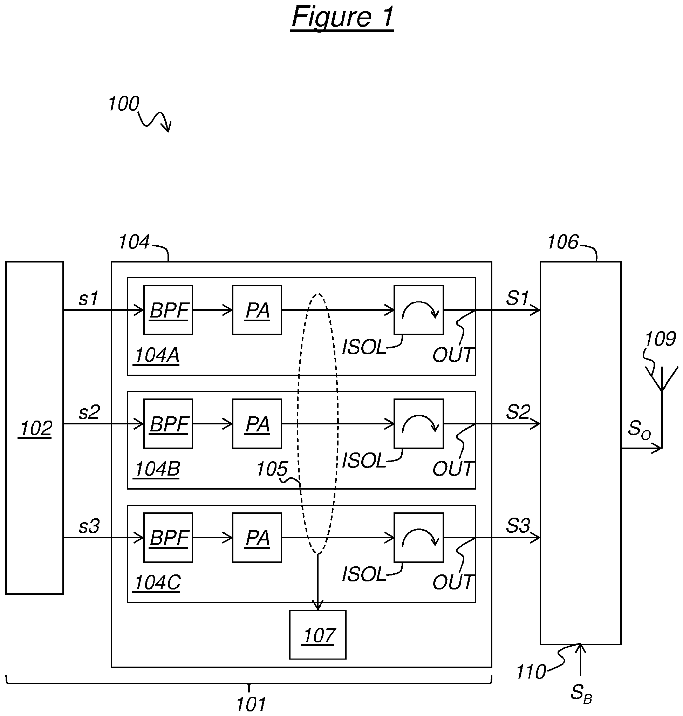

Referring to figure 1, an example of network control unit (NCU) 100 for an aircraft, according to the invention will now be described.

The NCU 100 comprises a noise generation system 101 for generating noise signals S1, S2, S3 in respective frequency bands.

The noise generation system 101 comprises a digital noise generation unit 102 for generating low power noise signals s1, s2, s3 in the respective frequency bands. In the described example, the digital noise generation unit 102 is designed for generating three low power noise signals s1, s2, s3 in respectively the three following frequency bands: (NB700) 728 - 844 MHz, (NB900) 925 - 960 MHz and (NB2100) 2110 - 2170 MHz. It will be noted that these frequency bands are each wideband, that is to say that they each extend over more than 20 MHz. It will also be noted that at least one frequency band extends over more than 100 MHz.

The digital noise generation unit 102 is for example as described in patent US 8 159 280 B2.

The noise generation system 101 further comprises a power amplifier stage 104 comprising power amplifiers 104A, 104B, 104C for respectively amplifying the low power noise signals s1, s2, s3 in order to provide the noise signals S1, S2, S3.

Each power amplifier 104A, 104B, 104C is designed to provide a predefined amplification factor over the whole respective frequency band. For example, the power amplifier 104A is designed to provide a predefined amplification factor over the frequency band (NB700) 728 - 844 MHz. Because the frequency bands are wideband, the power amplifiers 104A, 104B, 104C are wideband amplifiers.

Each power amplifier 104A, 104B, 104C comprises a band-pass filter BPF designed for filtering the low power noise signals s1, s2, s3. In the described example, each band-pass filter BPF is a ceramic band-pass filter BPF.

Each power amplifier 104A, 104B, 104C further comprises a power amplifier block PA designed for amplifying the filtered low power noise signal s1, s2, s3 into the respective noise signal S1, S2, S3 outputted by the power amplifier 104A, 104B, 104C. Each power amplifier block PA is designed for providing the respective noise signal S1, S2, S3 at a power of at least 10 dBm. More precisely, in the described example, each power amplifier block PA is designed for being controlled to provide the respective noise signal S1, S2, S3 at a power between 10 dBm and 30 dBm. Furthermore, the power amplifier blocks PA are designed for being controlled to be selectively activated and deactivated independently one from another.

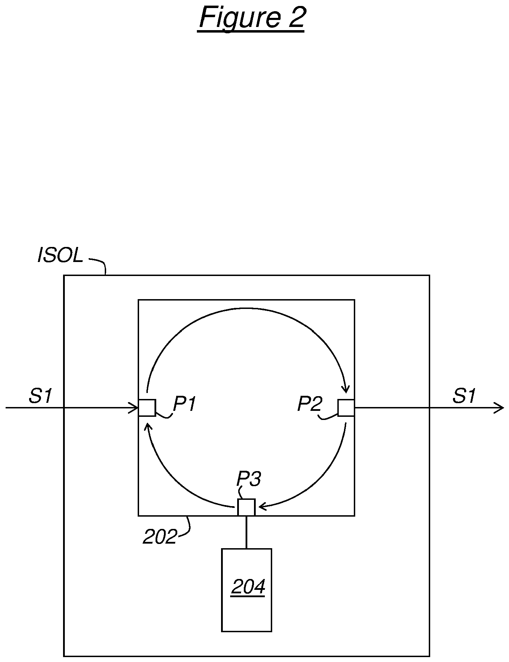

Each power amplifier 104A, 104B, 104C further comprises an isolator ISOL connected to an output OUT of the power amplifier 104A, 104B, 104C and designed for preventing signals from being reflected back to the power amplifier block PA. The isolator ISOL will be described in greater detail below, with reference to figure 2.

The NCU further comprises a current monitoring system 105 designed for monitoring currents respectively outputted by the power amplifier blocks PA of the power amplifiers 104A, 104B, 104C. The current monitoring system 105 is used to observe the current of each power amplifier block PA to get information about operation of a transistor of this power amplifier block PA through aging, temperature, voltage, etc., and therefore possible radiofrequency performance degradation. If a power amplifier monitoring system 107 detects that a first threshold is reached (for example, under conditions defined in a requirement specification and nominal radiofrequency output power), this power amplifier monitoring system 107 generates a current alarm, indicating a possible RF performance degradation.

Each power amplifier 104A, 104B, 104C can be switched off individually, for example, for power saving, one of several of the power amplifiers can be switched off when not used.

Each power amplifier 104A, 104B, 104C preferably further comprises an integrated current sensor (not shown on the figures) and an hardware defined second threshold. The integrated current sensor is designed for disabling this power amplifier 104A, 104B, 104C when the sensed current reaches this second threshold, which is indicative of erroneous operation of the power amplifier 104A, 104B, 104C (e.g. oscillation, short circuit, ...). This second threshold is much higher than the first threshold set for alarm monitoring. Alternatively, the current monitoring system 105 can be used instead of the integrated current sensors.

The NCU 100 further comprises a multi-band combiner 106 connected to the outputs OUT of the power amplifiers 104A, 104B, 104C and designed for filtering and summing the noise signals S1, S2, S3 and, optionally, a base signal S_{B} provided for example by a base transceiver station (BTS), a node or a enode of the aircraft, into a single output signal S_{O} to be provided to an antenna 109. In order to receive the base signal S_{B}, the multi-band combiner 106 comprises an input 110.

Referring to figure 2, the isolator ISOL of the first power amplifier 104A will now be described. In the described example, the isolators ISOL of the other two power amplifiers 104B, 104C are identical.

The isolator ISOL comprises a circulator 202 comprising a first port P1 connected to the power amplifier block PA, a second port P2 connected to the output of the power amplifier 104A and a third port P3. The circulator 202 is designed such that the noise signal entering the first port P1 is provided to the second port P2 and such that a return signal entering the second port P2 is provided to the third port P3.

The isolator ISOL further comprises a matched load 204 connected to the third port P3.

For each power amplifier 104A, 104B, 104C, the load (formed by the multi-band combiner 106) connected to the output OUT of the power amplifier 104A, 104B, 104C is often mismatched with respect to the transmission line (formed by the power amplifier 104A, 104B, 104C), so that part of the noise signal S3 is reflected back as a return signal and enters the output OUT of the power amplifier 104A, 104B, 104C. However, thanks to the circulator 202, the return signal is directed to the matched load 204, which absorbs it. In this manner, the isolator ISOL prevents the return signal from going back to the power amplifier block PA, and therefore decreases the risk of unwanted oscillations in the power amplifier 104A, 104B, 104C.

Preferably, the circulator 202 used in the power amplifiers 104A, 104B for frequency bands below 1 GHz (i.e. NB700 and NB900) has a bandwidth wider than the circulator 202 used in the power amplifier 104C for frequency band around 2 GHz (i.e. NB2100).

It is clear that a network control unit such as described above allows preventing unwanted oscillations to appear in the power amplifiers.

It should also be noted that the invention is not limited to the embodiments and alternatives described hereinabove. More specifically, one of ordinary skill in the art will realize that various modifications can be provided to the embodiments and alternatives described hereinabove, using the information disclosed herein, the scope being defined by the appended claims.

## Claims

1. Network control unit (100) comprising:
- a noise generation unit (102) for generating low power noise signals (s1, s2, s3) in respective frequency bands;
- power amplifier blocks (PA) for respectively amplifying the low power noise signals (s1, s2, S3) into noise signals (S1, S2, S3); and
- a multi-band combiner (106) designed for summing the noise signals (S1, S2, S3) into a single output signal (S_{O}) to be provided to an antenna (109);
**characterized in that** the network control unit (100) further comprises, for at least one of the power amplifier blocks (PA), a circulator (202) connected between this power amplifier block (PA) and the multi-band combiner (106).

2. Network control unit (100) according to claim 1, wherein the network control unit (100) comprises, for each of the power amplifier blocks (PA), a circulator (202) connected between the power amplifier block (PA) and the multi-band combiner (106).

3. Network control unit (100) according to claim 1 or 2, wherein the circulator (202) comprises a first port (P1) connected to the power amplifier block (PA), a second port (P2) connected to the multi-band combiner (106) and a third port (P3), and is designed such that the noise signal (S1, S2, S3) entering the first port (P1) is provided to the second port (P2) and such that a return signal entering the second port (P2) is provided to the third port (P3), and further comprising a matched load (204) connected to the third port (P3).

4. Network control unit (100) according to any of claims 1 to 3, comprising, for at least one power amplifier block (PA), a band-pass filter (BPF) connected between the noise generation unit (102) and the power amplifier block (PA).

5. Network control unit (100) according to claim 4, wherein the band-pass filter is a ceramic band-pass filter (BPF).

6. Network control unit (100) according to any of claims 1 to 5, further comprising a current monitoring system (105) for monitoring currents respectively outputted by the power amplifier blocks (PA).

7. Network control unit (100) according to any of claims 1 to 6, wherein each power amplifier block (PA) is designed for providing the respective noise signal (S1, S2, S3) at a power of at least 10 dBm.

8. Network control unit (100) according to claim 7, wherein each power amplifier block (PA) is designed for being controlled to provide the respective noise signal (S1, S2, S3) at a power between 10 dBm and 30 dBm.

9. Network control unit (100) according to any of claims 1 to 8, wherein the power amplifier blocks (PA) are designed for being controlled to be selectively activated and deactivated independently one from another.

10. Aircraft comprising a network control unit (100) according to any of claims 1 to 9.

## Patentansprüche

1. Netzwerksteuerungseinheit (100) umfassend:
- eine Rauscherzeugungseinheit (102) zum Erzeugen von Rauschsignalen mit geringer Leistung (s1, s2, s3) in den jeweiligen Frequenzbändern;
- Leistungsverstärkerblöcke (PA) zum jeweiligen Verstärken der Rauschsignale mit geringer Leistung (s1, s2, s3) in Rauschsignale (S1, S2, S3); und
- einen Multibandkombinierer (106), der dazu ausgelegt ist, die Rauschsignale (S1, S2, S3) zu einem einzigen Ausgangssignal (Sₒ) zu summieren, das einer Antenne (109) zugeführt wird;
**dadurch gekennzeichnet, dass** die Netzwerksteuerungseinheit (100) ferner für mindestens einen der Leistungsverstärkerblöcke (PA) einen Zirkulator (202) umfasst, der zwischen diesen Leistungsverstärkerblock (PA) und den Multibandkombinierer (106) geschaltet ist.

2. Netzwerksteuerungseinheit (100) nach Anspruch 1, wobei die Netzwerksteuerungseinheit (100) für jeden der Leistungsverstärkerblöcke (PA) einen Zirkulator (202) umfasst, der zwischen den Leistungsverstärkerblock (PA) und den Multibandkombinierer (106) geschaltet ist.

3. Netzwerksteuerungseinheit (100) nach Anspruch 1 oder 2, wobei der Zirkulator (202) einen ersten Anschluss (P1), der mit dem Leistungsverstärkerblock (PA) verbunden ist, einen zweiten Anschluss (P2), der mit dem Multibandkombinierer (106) verbunden ist, und einen dritten Anschluss (P3) umfasst und so ausgelegt ist, dass das in den ersten Anschluss (P1) eintretende Rauschsignal (S1, S2, S3) dem zweiten Anschluss (P2) zugeführt wird, und so, dass ein in den zweiten Anschluss (P2) eintretendes Rücksignal dem dritten Anschluss (P3) zugeführt wird, und ferner umfassend eine angepasste Last (204), die mit dem dritten Anschluss (P3) verbunden ist.

4. Netzwerksteuerungseinheit (100) nach einem der Ansprüche 1 bis 3, umfassend, für mindestens einen Leistungsverstärkerblock (PA), einen Bandpassfilter (BPF), der zwischen die Rauscherzeugungseinheit (102) und den Leistungsverstärkerblock (PA) geschaltet ist.

5. Netzwerksteuerungseinheit (100) nach Anspruch 4, wobei der Bandpassfilter ein keramischer Bandpassfilter (BPF) ist.

6. Netzwerksteuerungseinheit (100) nach einem der Ansprüche 1 bis 5, ferner umfassend ein Stromüberwachungssystem (105) zum Überwachen von Strömen, die jeweils von den Leistungsverstärkerblöcken (PA) ausgegeben werden.

7. Netzwerksteuerungseinheit (100) nach einem der Ansprüche 1 bis 6, wobei jeder Leistungsverstärkerblock (PA) dazu ausgelegt ist, das jeweilige Rauschsignal (S1, S2, S3) mit einer Leistung von mindestens 10 dBm bereitzustellen.

8. Netzwerksteuerungseinheit (100) nach Anspruch 7, wobei jeder Leistungsverstärkerblock (PA) dazu ausgelegt ist, gesteuert zu werden, um das jeweilige Rauschsignal (S1, S2, S3) mit einer Leistung zwischen 10 dBm und 30 dBm bereitzustellen.

9. Netzwerksteuerungseinheit (100) nach einem der Ansprüche 1 bis 8, wobei die Leistungsverstärkerblöcke (PA) dazu ausgelegt sind, unabhängig voneinander selektiv aktiviert und deaktiviert zu werden.

10. Luftfahrzeug, umfassend eine Netzwerksteuerungseinheit (100) nach einem der Ansprüche 1 bis 9.

## Revendications

1. Unité de commande de réseau (100) comprenant :
- une unité de génération de bruit (102) pour générer des signaux de bruit à faible puissance (s1, s2, s3) dans des bandes de fréquence respectives ;
- des blocs amplificateurs de puissance (PA) pour amplifier respectivement les signaux de bruit à faible puissance (s1, s2, s3) en signaux de bruit (S1, S2, S3) ; et
- un multiplexeur multibande (106) conçu pour sommer les signaux de bruit (S1, S2, S3) en un unique signal de sortie (Sₒ) à fournir à une antenne (109) ;
**caractérisé en ce que** l'unité de commande de réseau (100) comprend en outre, pour au moins un des blocs amplificateurs de puissance (PA), un circulateur (202) connecté entre ce bloc amplificateur de puissance (PA) et le multiplexeur multibande (106).

2. Unité de commande de réseau (100) selon la revendication 1, dans laquelle l'unité de commande de réseau (100) comprend, pour chacun des blocs amplificateurs de puissance (PA), un circulateur (202) connecté entre le bloc amplificateur de puissance (PA) et le multiplexeur multibande (106).

3. Unité de commande de réseau (100) selon la revendication 1 ou 2, dans laquelle le circulateur (202) comprend un premier port (P1) connecté au bloc amplificateur de puissance (PA), un deuxième port (P2) connecté au multiplexeur multibande (106) et un troisième port (P3), et est conçu de telle sorte que le signal de bruit (S1, S2, S3) entrant dans le premier port (P1) est fourni au deuxième port (P2) et de telle sorte qu'un signal de retour entrant dans le deuxième port (P2) est fourni au troisième port (P3), et comprenant en outre une charge adaptée (204) connectée au troisième port (P3).

4. Unité de commande de réseau (100) selon l'une quelconque des revendications 1 à 3, comprenant, pour au moins un bloc amplificateur de puissance (PA), un filtre passe-bande (BPF) connecté entre l'unité de génération de bruit (102) et le bloc amplificateur de puissance (PA).

5. Unité de commande de réseau (100) selon la revendication 4, dans laquelle le filtre passe-bande est un filtre passe-bande (BPF) céramique.

6. Unité de commande de réseau (100) selon l'une quelconque des revendications 1 à 5, comprenant en outre un système de surveillance de courant (105) pour la surveillance de courants respectivement délivrés en sortie par les blocs amplificateurs de puissance (PA).

7. Unité de commande de réseau (100) selon l'une quelconque des revendications 1 à 6, dans laquelle chaque bloc amplificateur de puissance (PA) est conçu pour fournir le signal de bruit respectif (S1, S2, S3) à une puissance d'au moins 10 dBm.

8. Unité de commande de réseau (100) selon la revendication 7, dans laquelle chaque bloc amplificateur de puissance (PA) est conçu pour être commandé pour fournir le signal de bruit respectif (S1, S2, S3) à une puissance entre 10 dBm et 30 dBm.

9. Unité de commande de réseau (100) selon l'une quelconque des revendications 1 à 8, dans laquelle les blocs amplificateurs de puissance (PA) sont conçus pour être commandés pour être sélectivement activés et désactivés indépendamment l'un de l'autre.

10. Aéronef comprenant une unité de commande de réseau (100) selon l'une quelconque des revendications 1 à 9.
